(19) Europäisches Patentamt
European Patent Office
Office européen des brevets

(11) **EP 1 154 538 A1**

(12) **EUROPÄISCHE PATENTANMELDUNG**

(43) Veröffentlichungstag:
**14.11.2001 Patentblatt 2001/46**

(51) Int Cl.[7]: **H02H 3/20**, H02H 3/247

(21) Anmeldenummer: **00109907.6**

(22) Anmeldetag: **10.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT 80333 München (DE)**

(72) Erfinder: **Wolf, Johann, Dr., Dipl.-Ing. 93080 Pentling (DE)**

(54) **Unter- und/oder Überspannungsauslöser**

(57) Bei einem Unter- und/oder Überspannungsauslöser (1) sind eine Komparatorschaltung (2) zum Vergleichen einer zu überwachenden Spannung (U1) mit einem vorzugsweise einstellbaren Spannungsschwellwert (U2) und eine Verknüpfungsschaltung (3) vorgesehen, die das Zustandssignal (A) der Komparatorschaltung (2) mit einem Vergleichssignal (B) logisch verknüpft sowie bei Abweichung der Impulsdauer (TA) des Zustandssignals (A) von der Impulsdauer (T1) des Vergleichssignals (B) einen Unterspannungsimpuls ($S_U$) bzw. einen Überspannungsimpuls ($S_{UE}$) zur Generierung eines Auslöseimpulses ($P_A$) erzeugt.

Fig. 1

EP 1 154 538 A1

## Beschreibung

Die Erfindung bezieht sich auf einen Unter- und/oder Überspannungsauslöser mit einer Auslöseeinrichtung, die bei Abweichung einer zu überwachenden Spannung mit gegebener Netzfrequenz von einem Spannungsschwellwert einen Auslöseimpuls zur Betätigung eines Schaltkontaktes ausgibt.

Ein Unter- oder Überspannungsauslöser bewirkt das Öffnen oder Schließen eines elektrischen Schalters, beispielsweise eines Leistungsschalters, mit oder ohne Verzögerung, wenn die Spannung an dessen Anschlüssen einen gegebenen Wert unterschreitet bzw. überschreitet. Der Spannungsgrenzwert, bei dessen Unter- oder Überschreiten die Auslöseeinrichtung einen Auslöseimpuls zur Betätigung des elektrischen Schalters oder allgemein eines Schaltkontaktes ausgibt, ist dabei üblicherweise fest eingestellt. Ein Unterspannungsauslöser, bei dem der Spannungsgrenzwert mittels einer einem Gleichrichter nachgeschalteten Zenerdiode fest eingestellt ist, ist z.B. aus der DE 2 239 654 A1 und aus der DE 39 12 601 A1 bekannt.

Da ein Unter- oder Überspannungsauslöser in der Regel als Anbaugerät oder Anbaumodul für einen elektrischen Schutzschalter, insbesondere für einen Leitungsschutzschalter ausgeführt ist, müssen in der Praxis für unterschiedliche Anwendungen und darüber hinaus aufgrund vorschriftsgemäß zulässiger Spannungsbereiche verschiedene Auslösertypen mit unterschiedlichen Spannungsgrenzwerten bereitgestellt werden, bei deren Unter- bzw. Überschreiten eine Auslösung erfolgen soll. Zusätzlich zu dem damit verbundenen Nachteil der Lagerhaltung aufgrund der erforderlichen Typenvielfalt treten insbesondere beim Zusammenwirken mehrerer Unter- und/oder Überspannungsauslöser in einer Anlage häufig äußerst unerwünschte Probleme auf.

Der Erfindung liegt daher die Aufgabe zugrunde, einen möglichst universellen Unter- und/oder Überspannungsauslöser anzugeben, der unter Vermeidung der genannten Nachteile für verschiedene Anwendungen, insbesondere für unterschiedliche Nennwerte oder Nennspannungen eines zu schaltenden Stromnetzes, einsetzbar ist.

Diese Aufgabe wird erfindungsgemäß gelöst durch die Merkmale des Anspruchs 1. Dazu sind eine Komparatorschaltung zum Vergleichen der zu überwachenden Spannung mit dem Spannungsschwellwert und eine Verknüpfungsschaltung vorgesehen, die das in Form eines Zustandssignals mit einer ersten Impulsdauer vorliegende Komparatorsignal mit einem Vergleichssignal mit einer zweiten Impulsdauer logisch verknüpft. Bei einer Abweichung der Impulsdauer des Zustands- oder Komparatorsignals von der Impulsdauer des Vergleichssignals erzeugt die Verknüpfungsschaltung einen Unter- bzw. Überspannungsimpuls zur Generierung des Auslöseimpulses.

In vorteilhafter Weiterbildung ist der einem (zweiten) Eingang der Komparatorschaltung zugeführte Spannungsschwellwert eine veränderbare, d.h. manuell oder fernbedienbar eingestellte Vergleichsspannung. Das dem ersten Eingang der Komparatorschaltung zugeführte Spannungssignal ist zweckmäßigerweise aus der zu überwachenden Spannung durch Gleichrichtung sowie ggf. durch Spannungsteilung, Glättung und Verstärkung abgeleitet. Somit erfolgt eine Auslösung, wenn die zu überwachende Spannung die jeweils eingestellte Vergleichsspannung und damit einen entsprechenden Referenz- oder Auslösewert im Falle einer Unterspannungsüberwachung unterschreitet und im Falle einer Überspannungsüberwachung überschreitet. Für eine Ferneinstellung ist die Vergleichsspannung dem zweiten Eingang der Komparatorschaltung zweckmäßigerweise über einen Buskoppler zugeführt.

Die (zweite) Impulsdauer des Vergleichssignals entspricht zweckmäßigerweise dem 0,25-fachen der Netzfrequenz. Somit schneidet der Spannungsschwellwert - und damit die veränderbare Vergleichsspannung - eine zu überwachende sinusförmige Spannung bei 70,7% deren Scheitelwert für den Fall, dass die (erste) Impulsdauer des Zustandssignals der Komparatorschaltung und die Impulsdauer des Vergleichssignals der Verknüpfungsschaltung gleich sind. Der Spannungsschwellwert bzw. die Vergleichsspannung entspricht dann wertemäßig dem Effektivwert der zu überwachenden Wechselspannung und gleichzeitig dem Gleichspannungswert. Die zweite Impulsdauer ist dabei zweckmäßigerweise einstellbar, so dass diese an die jeweilige Netzfrequenz, z. B. 50Hz oder 60Hz, angepasst werden kann.

Die Impulsdauer des Vergleichssignals ist somit kleiner als die halbe Periodendauer der zu überwachenden Spannung. Ist die Impulsdauer des Zustands- oder Komparatorsignals länger als die Impulsdauer des Vergleichssignäls, so erzeugt die Verknüpfungsschaltung durch eine logische Verknüpfung des Zustandssignals mit dem invertierten Vergleichssignal einen Überspannungsimpuls. Ist die Impulsdauer des Zustandssignals kürzer als die Impulsdauer des Vergleichssignals, so liefert die Verknüpfungsschaltung aus einer logischen Verknüpfung des invertierten Zustandssignals mit dem Vergleichssignal einen Unterspannungsimpuls. Die Begriffe Unter- und Über-Spannung beziehen sich dabei auf einen Normalspannungswert, der durch die Gleichheit der Impulsdauern beider Signale definiert und durch die Impulsdauer des Vergleichssignals festgelegt ist.

Die Erzeugung des Vergleichssignals erfolgt zweckmäßigerweise mittels eines der Verknüpfungsschaltung zugeordneten ersten monostabilen Kippglied mit einer der zweiten Impulsdauer entsprechenden Verzögerungszeit. Dieses erste monostabile Kippglied in Form zweckmäßigerweise eines Monoflops ist eingangsseitig an den Ausgang der Komparatorschaltung und ausgangsseitig an jeweils einen ersten Eingang von vorzugsweise zwei UND-Gliedern geführt. An deren jeweiligen zweiten Eingang ist wiederum der Ausgang der Komparatorschaltung und damit dessen Zustandssignal geführt.

Überschreitet die zu überwachende Spannung und damit die am ersten Eingang der Komparatorschaltung anstehende Eingangsspannung den Spannungsschwellwert, so wechselt das Zustandssignal der Komparatorschaltung beispielsweise von low auf high und stößt das erste Kippglied mit dessen fester oder konstanter (zweiter) Impulsdauer an. Die Verknüpfung des Zustandssignals mit dem Vergleichssignal führt dann zum Überspannungsimpuls, wenn die (erste) Impulsdauer des Zustandssignals länger ist als die konstante (zweite) Impulsdauer des Vergleichssignals. Dies ist der Fall, wenn die zu überwachende Spannung den Spannungsschwellwert und darüber hinaus den Normalspannungswert, bei dem die Impulsdauern des Zustands-signals und des Vergleichssignals gleich sind, übersteigt. Im umgekehrten Fall, wenn die zu überwachende Spannung zwar den Normalspannungswert bereits unterschreitet, jedoch den Spannungsschwellwert noch überschreitet, erzeugt die Verknüpfungsschaltung den Unterspannungsimpuls, da dann die Impulsdauer des Zustandssignals kürzer ist als die Impulsdauer des Vergleichssignals.

Ist die zu überwachende Spannung und damit die daraus abgeleitete, am ersten Eingang der Komparatorschaltung anstehende Eingangsspannung kleiner als der Spannungsschwellwert oder aber handelt es sich um eine Gleichspannung, die kleiner oder größer ist als der Spannungsschwellwert, so bleibt das Zustandssignal der Komparatorschaltung auf einem konstanten Wert, beispielsweise high oder low. Demzufolge wird das erste monostabile Kippglied nicht aktiviert und die Verknüpfungs-schaltung liefert keine Signale.

In zweckmäßiger Ausgestaltung ist der Verknüpfungsschaltung ein zweites monostabiles Kippglied, zweckmäßigerweise ebenfalls in Form eines Monoflops zugeordnet, dessen Impulsdauer mindestens der halben Netzfrequenz entspricht. Dieses zweite Kippglied wird angestoßen, wenn das Zustandssignal einen Signalwechsel zeigt. Bei regelmäßigem Anstoß des zweiten Kippglieds liefert dieses ein konstantes Ausgangssignal, z. B. high. Erst bei Übergang der zu überwachenden Spannung unterhalb des Spannungsschwellwertes oder bei Anliegen einer Gleichspannung wechselt das Ausgangssignal des zweiten Kippgliedes z. B. auf low.

Analog zur Einstellbarkeit der (zweiten) Impulsdauer bzw. der Verzögerungszeit des ersten monostabilen Kippgliedes ist auch die Verzögerungszeit des zweiten monostabilen Kippgliedes und damit die (dritte) Impulsdauer in Abhängigkeit von der jeweiligen Netzfrequenz einstellbar. Dazu ist bei einer analogen Ausführung und Ansteuerung der Kippglieder beispielsweise ein Potentiometer vorgesehen, während bei einer digitalen Ausführung als Zähler der jeweilige Zählwert einstellbar oder vorgebbar ist.

Durch eine logische UND-Verknüpfung des Zustandssignals der Komparatorschaltung mit dem invertierten Ausgangssignal des zweiten Kippgliedes für Überspannungen und eine logische UND-Verknüpfung sowohl des invertierten Zustandssignals als auch des invertierten Ausgangssignals des zweiten Kippgliedes für Unterspannungen können sowohl Gleichspannungssignale als auch Wechselspannungssignale zuverlässig überwacht werden.

Zur Erzeugung einer Gesamtaussage mit demselben Spannungsauslöser werden vorzugsweise einerseits die beiden Unterspannungssignale, die aus einer logischen UND-Verknüpfung des invertierten Zustandssignals mit dem Ausgangs- oder Vergleichs-signal der ersten Kippstufe und des invertierten Zustandssignals mit dem invertierten Ausgangssignal der zweiten Kippstufe gebildet sind, sowie andererseits die beiden Überspannungssignale, die aus einer logischen UND-Verknüpfung des Zustandssignals mit dem invertierten Vergleichssignal der ersten Kippstufe und des Zustandssignals mit dem invertierten Ausgangssignal der zweiten Kippstufe gebildet sind, jeweils mittels eines ODER-Gliedes verknüpft. Deren Ausgangssignale werden, vorzugsweise wiederum über einen digitalen Umschalter, einer bistabilen Kippstufe zugeführt, um den erkannten Über- oder Unterspannungszustand festzuhalten.

Die entsprechende Meldung der zweckmäßigerweise als Flipflop ausgeführten bistabilen Kippstufe bleibt solange erhalten, bis dieses über eine Quittierungstaste zurückgesetzt ist. Die bistabile Kippstufe ist ausgangsseitig mit der Auslöseeinrichtung in Form beispielsweise eines Auslöserelais oder eines Arbeitsstromauslösers zur Betätigung eines Schaltkontaktes oder eines Schalters verbunden.

Die mit der Erfindung erzielten Vorteile bestehen insbesondere darin, dass mit einer Komparatorschaltung zum Vergleichen einer zu überwachenden Spannung mit einem vorzugsweise einstellbaren Auslöse- oder Spannungsschwellwert und einer Verknüpfungsschaltung zur logischen Verknüpfung des Komparator-oder Zustandssignals mit einem Vergleichssignal durch einen Vergleich deren Impulsdauern ein universeller Unter- und/oder Überspannungsauslöser bereitgestellt ist. Dabei wird ein entsprechendes Erfassungs- und Bearbeitungsprinzip für den gesamten Bereich von einer Unterspannung bis zu einer Überspannung gegenüber einem vorzugsweise einstellbaren Spannungsschwellwert verwendet.

Die Einstellbarkeit des Spannungsschwellwerts ermöglicht darüber hinaus eine Adaptierung des Unter- und/oder Überspannungsauslösers an beliebige Auslösefälle sowie eine Abstimmung mehrerer solcher Spannungsauslöser untereinander. Dabei kann die Einstellung des Spannungsschwellwertes sowohl vor Ort manuell am Gerät selbst oder über eine Kommunikationsschnittstelle, z.B. über eine Busankopplung an den sogenannten European Installations Bus (EIB), erfolgen. Über diese Kommunikationsschnittstelle kann der jeweilige Spannungsschwellwert zudem bedarfsweise angepasst und auch ausgelesen werden.

Des Weiteren kann über die Kommunikationsschnittstelle oder auch manuell am Gerät zwischen den beiden Funktionen des Unter- und Überspannungsauslösers umgeschaltet werden. Ferner können auch einzelne Verarbeitungsschritte oder Zwischenergebnisse, beispielsweise eine Dauerüberspannung, eine Dauerunterspannung oder ein Auslöserzustand, z.B. mittels einer Leuchtdiode (LED) am Gerät selbst angezeigt oder über die Kommunikationsschnittstelle gemeldet werden.

Der universelle Unter- und/oder Überspannungsauslöser eignet sich besonders als Anbaumodul für ein Niederspannungsschaltgerät, insbesondere für einen elektrischen Schutzschalter, z.B. für einen Leitungsschutzschalter.

Nachfolgend werden Ausführungsbeispiele der Erfindung anhand einer Zeichnung näher erläutert. Darin zeigen:

FIG 1   schematisch einen über ein Auslöserelais mit einem einzelnen Schaltkontakt zusammenwirkenden Unter- und Überspannungsauslöser mit einer Komparatorschaltung zur Einstellung eines Auslösegrenzwertes und mit einer Verknüpfungsschaltung für einen Impulsdauer-Vergleich,

FIG 2   in einem Signal-Diagramm die von der Komparatorschaltung und von der Verknüpfungsschaltung erzeugten Zustands- und Verknüpfungssignale,

FIG 3   einen Unter- und Überspannungsauslöser gemäß FIG 1 mit einer Busankopplung und mit einer über ein Schaltschloss mit Schaltkontakten zusammenwirkenden Auslöseeinrichtung,

FIG 4   einen Unterspannungsauslöser in einer Darstellung gemäß FIG 1.

Einander entsprechende Teile sind in allen Figuren mit den gleichen Bezugszeichen versehen.

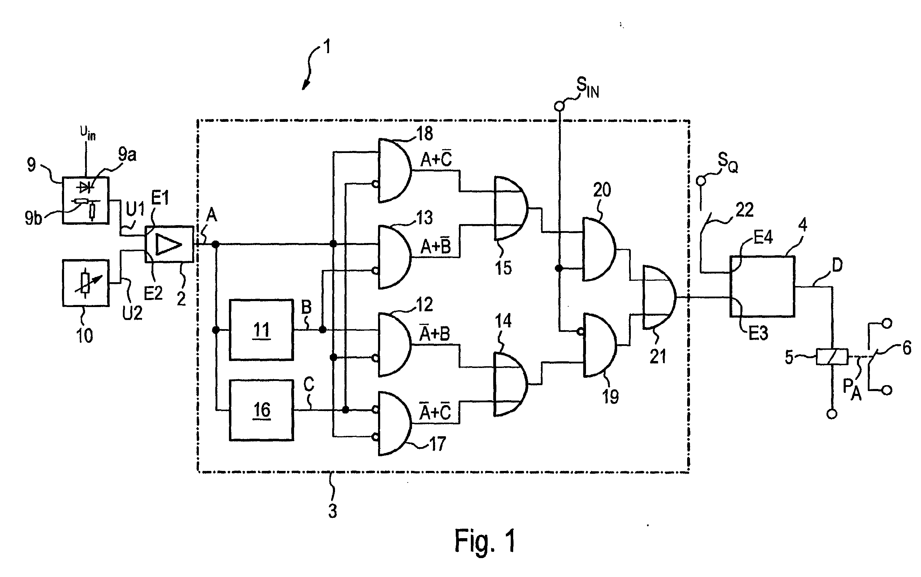

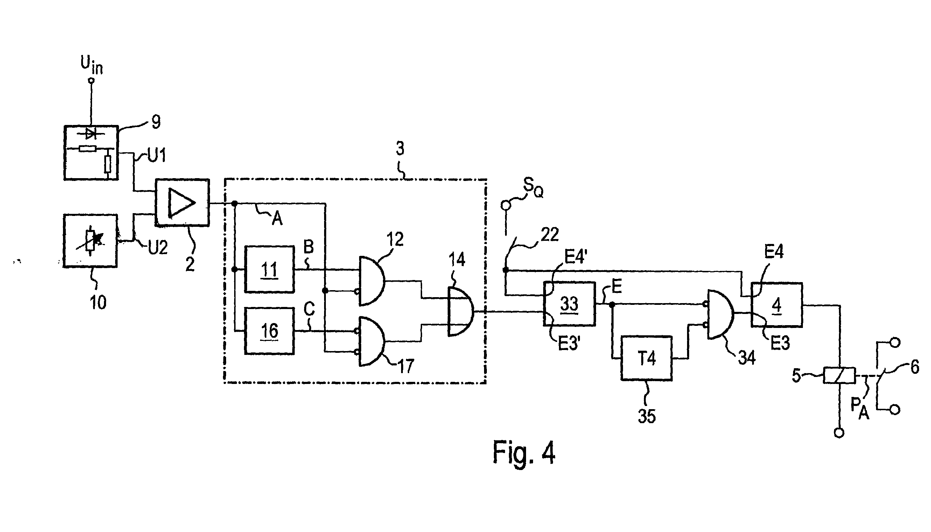

Der in FIG 1 dargestellte Unter- und Überspannungsauslöser 1 umfasst einen Operationsverstärker in Komparatorschaltung 2 und eine dieser nachgeschalteten Verknüpfungsschaltung 3, die ausgangsseitig über eine bistabile Kippstufe 4 mit einer Auslöseeinrichtung in Form eines Auslöserelais 5 verbunden ist. Das Auslöserelais 5 ist mechanisch mit einem Schaltkontakt 6 gekoppelt. Alternativ kann gemäß FIG 4 die Auslöseeinrichtung 5 auch mit einem Schaltschloss 7 eines elektrischen Schutzschalters 8, z. B. eines Leitungsschutzschalters, gekoppelt sein, dessen Schaltkontakte 6 in die Phasenleitungen L1,L2,L3 eines Strom- oder Versorgungsnetzes geschaltet sind.

Ein erster Eingang E1 der Komparatorschaltung 2 ist mit einer ersten Eingangsstufe 9 verbunden, der eingangsseitig die zu überwachende Spannung $U_{in}$ zugeführt ist. Die Eingangsstufe 9 umfasst eine durch eine Diode symbolisierte Gleichrichterschaltung 9a und eine durch ohmsche Widerstände symbolisierte Spannungsteilerschaltung 9b. Der zweite Eingang E2 der Komparatorschaltung 2 ist mit einer zweiten Eingangsstufe 10 verbunden, die einen manuell veränderbaren Spannungsteiler in Form beispielsweise eines in nicht näher dargestellter Art und Weise mittels eines Bedienelementes betätigbaren Potentiometers, eines Codierschalters oder eines Dip-Schalters aufweist.

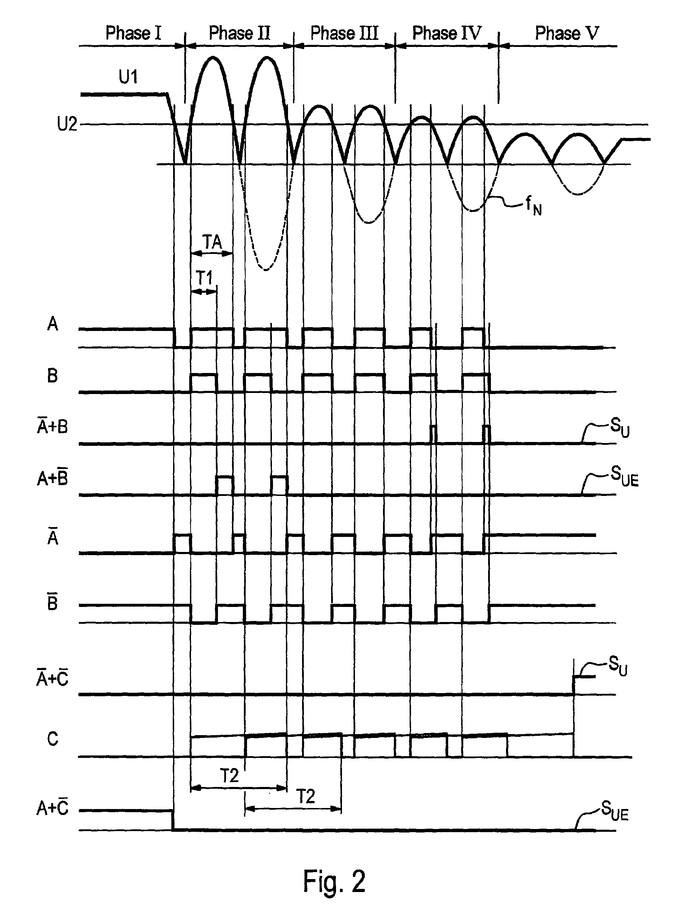

In der Eingangsstufe 9 wird die zu überwachende Spannung $U_{in}$ mittels der Gleichrichterschaltung 9a gleichgerichtet. Die gleichgerichtete und ggf. mittels der Spannungsteilerschaltung 9b reduzierte Spannung $U_{in}$ wird als Eingangsspannung U1 dem ersten Eingang E1 der Komparatorschaltung 2 zugeführt. Dem zweiten Eingang E2 der Komparatorschaltung 2 wird eine Referenz- oder Vergleichsspannung U2 zugeführt, die mittels der zweiten Eingangsstufe 10 durch manuelle Betätigung bedarfsweise eingestellt ist. Die Eingangsspannung U1 und die jeweils eingestellte Vergleichsspannung U2 sind im oberen Teil des Signal-Diagramms gemäß FIG 2 dargestellt.

Der Einstellbereich für die Vergleichsspannung U2 deckt dabei zweckmäßigerweise alle oder zumindest eine Vielzahl von durch einen derartigen Unter- oder Überspannungsauslöser 1 zu repräsentierenden Auslösegrenzwerten ab. Die zur Generierung der Referenz- oder Vergleichsspannung U2 vorgesehene Spannungsversorgung der zweiten Eingangsstufe 10 erfolgt dabei in nicht näher dargestellter Art und Weise bevorzugt aus der Versorgungsspannung einer bei einem derartigen Spannungsauslöser 1 üblicherweise vorgesehenen Elektronik.

Die Komparatorschaltung 2 liefert ausgangsseitig ein Komparator- oder Zustandssignal A mit einer im Signal-Diagramm nach FIG 2 eingetragenen ersten Impulsdauer TA. Das Zustandssignal A ist einem ersten monostabilen Kippglied in Form eines Monoflops 11 mit einer eingestellten Verzögerungszeit eingangsseitig zugeführt. Das im Diagramm gemäß FIG 2 dargestellte Ausgangssignal B des ersten Kippgliedes 11 mit einer zweiten Impulsdauer T1 und das Zustandssignal A der Komparatorschaltung 2 mit der ersten Impulsdauer TA sind zwei UND-Gliedern 12,13 der Verknüpfungsschaltung 3 direkt oder invertiert zugeführt, die ausgangsseitig die im Diagramm gemäß FIG 2 dargestellten Verknüpfungssignale $\bar{A}+B$ bzw. $A+\bar{B}$ liefern. Diese Verknüpfungssignale sind einem ersten ODER-Glied 14 bzw. einem zweiten ODER-Glied 15 der Verknüpfungsschaltung 3 zugeführt.

Die Impulsdauer T1 des Vergleichssignals B ist zweckmäßigerweise auf ein Viertel der Netzfrequenz $f_N$ eingestellt, so dass T1 = 1/4 · $f_N$ ist. Bei einer Netzfrequenz von $f_N$ = 50Hz ist somit die Impulsdauer T1 = 5ms. Damit schneidet der Spannungsschwellwert oder die Vergleichsspannung U2 eine sinusförmige zu überwachende Spannung U1 bei 70,7% dessen Scheitelwert, wenn TA = T1 ist. Die Vergleichsspannung U2 entspricht dann wertemäßig dem Effektivwert der zu überwachenden Wechselspannung U1 und gleichzeitig dem Gleichspannungswert. Dies ist anhand eines als Phase III bezeichneten Spannungsverlaufs der zu überwachenden Spannung U1 im Diagramm gemäß FIG 2 veranschaulicht.

Das Zustandssignal A ist zudem einem zweiten monostabilen Kippglied in Form eines Monoflops 16 mit einer ebenfalls vorgegebenen Verzögerungszeit eingangsseitig zugeführt. Das im Diagramm gemäß FIG 2 dargestellte Ausgangssignal C des zweiten Kippgliedes 16 mit einer dritten Impulsdauer T2 und das Zustandssignal A der Komparatorschaltung 2 sind zwei weiteren UND-Gliedern 17,18 der Verknüpfungsschaltung 3 direkt und invertiert zugeführt, die ausgangsseitig die im Diagramm nach FIG 2 dargestellten Verknüp- fungssignale $\bar{A}+\bar{C}$ bzw. $A+\bar{C}$ liefern. Diese Verknüp- fungssignale sind dem ersten ODER-Glied 14 bzw. dem zweiten ODER-Glied 15 der Verknüpfungsschaltung 3 zugeführt.

Die Impulsdauer T2 des zweiten Monoflops 16 ist zweckmäßigerweise länger als die halbe Periodendauer der zu überwachenden Spannung $U_{IN}$ und damit der aus dieser abgeleiteten Eingangsspannung U1. Die Impulsdauer T2 entspricht somit mindestens der halben Netzfrequenz $F_N$ (T2 > 1/2 · $f_N$).

Ausgangsseitig sind die beiden ODER-Glieder 14 und 15 an jeweils einen Eingang eines weiteren UND-Gliedes 19 bzw. 20 geführt, deren jeweiligem weiteren Eingang ein Eingangssignal $S_{IN}$ invertiert bzw. direkt zugeführt ist. Ausgangsseitig sind die beiden UND- Glieder 19 und 20 der Verknüpfungsschaltung 3 an ein ODER-Glied 21 geführt, das ausgangsseitig an einen ersten Eingang E3 der bistabilen Kippstufe 4 geführt ist. Einem zweiten Eingang E4 der bistabilen Kippstufe 4 ist über eine Quittierungstaste oder einen Quittierungsschalter 22 ein Quittierungssignal $S_Q$ zuführbar. Ein Ausgangssignal D der bistabilen Kippstufe 4 ist oder schaltet eine Spannungsversorgung der Auslösevorrichtung 5, die in Abhängigkeit vom Signalzustand des Ausgangssignals D, z. B. low, einen Auslöseimpuls $P_A$ erzeugt. Die UND-Glieder 19 und 20 sowie das ODER- Glied 21 bilden einen digitalen Umschalter der Verknüpfungsschaltung 3.

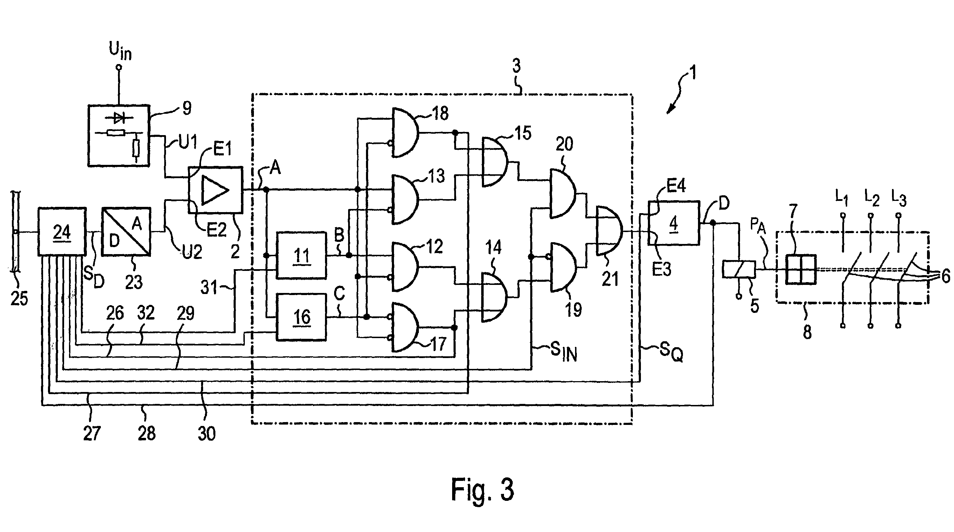

Bei dem in FIG 3 dargestellten einstellbaren Unter- und Überspannungsauslöser 1 ist der zweite Eingang E2 der Komparatorschaltung 2 über einen Analog- Digital-Wandler 23 an einen Buskoppler 24 geführt, der mit einem Installationsbus 25, z. B. mit einem European Installations Bus (EIB), kontaktiert ist. Die Einstellung oder Veränderung der Vergleichsspannung U2 erfolgt vorteilhafterweise durch eine Ferneinstellung über den Installationsbus 25 und den Buskoppler 24. Dazu wird ein vom Busankoppler 24 geliefertes digitales Steuersignal $S_D$ mittels des Digital-Analog-Wandlers 23 in die analoge Vergleichsspannung U2 umgewandelt. Durch Integration eines entsprechenden Prozessors in den Busankoppler 24 kann dieser auch direkt die Vergleichsspannung U2 ausgeben. Sowohl die Eingangsspannung U1 als auch die Vergleichsspannung U2 kann ein kontinuierliches, analoges Signal oder ein zeitdiskretes, digitales Signal sein.

Dem Buskoppler 24 sind über Signalleitungen 26 und 27 die Zustände der UND-Glieder 17 bzw. 18 sowie über eine Signalleitung 28 der Ausgangszustand D der bistabilen Kippstufe 4 zugeführt. Über den Buskoppler 24 werden zudem das Eingangsoder Umschaltsignal $S_{IN}$ und das Quittierungssignal $S_Q$ über Steuerleitungen 29,30 den UND-Glieder 19 und 20 bzw. dem Eingang E4 der bistabilen Kippstufe 4 zugeführt. Diese Ausführungsform gemäß FIG 3 eignet sich daher besonders zur Einbindung des einstellbaren Unter- und Überspannungsauslösers 1 in das EIB-System.

Über weitere Steuerleitungen 31 und 32, die an die beiden Kippglieder 11 bzw. 16 geführt sind, ist deren Impulsdauer T1, T2 einstellbar oder veränderbar. Die in Abhängigkeit von der jeweiligen Netzfrequenz $f_N$ vorzunehmende Einstellung der Impulsdauer T1 und/ oder T2 und damit die Änderung oder Vorgabe der Verzögerungszeit der Kippglieder 11,16 erfolgt bei der Ausführung gemäß FIG 3 ferngesteuert über den Buskoppler 24. Sind dabei die Kippglieder 11,16 analog ausgeführt, erfolgt die Einstellung zweckmäßigerweise mittels eines (nicht dargestellten) Potentiometers oder dgl. Bei einer digitalen Ausführung der Kippglieder in Form von Zählern, werden - je nach Netzfrequenz $f_N$, mit z. B. $f_N$ = 50Hz oder $f_N$ = 60Hz, - deren jeweiligen Zählwerte eingestellt oder vorgegeben.

Ist gemäß des in FIG 2 als Phase II bezeichneten Spannungsverlaufs die zu überwachende Spannung $U_{IN}$ und damit die daraus abgeleitete Eingangsspannung U1 am Eingang E1 der Komparatorschaltung 2 größer als die an dessen zweiten Eingang E2 geführte Vergleichsspannung U2, so wechselt gemäß dem Signalverlauf nach FIG 2 das Komparator- oder Zustandssignal A von low auf high und stößt die beiden Monoflops 11 und 16 mit der jeweils eingestellten Impulsdauer T1 bzw. T2 an.

Ist die Impulsdauer TA des Zustandssignals A länger als die Impulsdauer T1 des Ausgangs- oder Vergleichssignals B des ersten Monoflops 11, so liefert die logische Verknüpfung $A+\bar{B}$ des UND-Gliedes 13 der Verknüpfungsschaltung 3 einen Überspannungsimpuls $S_{UE}$ (Phase II). Ist dagegen die Impulsdauer TA kürzer als die Impulsdauer T1 (Phase IV), so liefert die logische Verknüpfung $\bar{A}+B$ des UND-Gliedes 12 der Verknüpfungsschaltung 3 einen Unterspannungsimpuls $S_U$. Diese Unter-bzw. Überspannung bezieht sich auf den in Phase III der FIG 2 veranschaulichten Normalspannungswert. Dieser ist durch die Beziehung TA = T1 definiert und wird durch die Impulsdauer T1 festgelegt.

Das jeweilige Über- bzw. Unterspannungssignal $S_{UE}$ bzw. $S_U$ wird über die Verknüpfungsglieder 19 bis 21 der Verknüpfungsschaltung 3 an die bistabile Kippstufe 4 geführt, deren Ausgangssignal D die Auslösevorrichtung 5 entsprechend ansteuert. Die Auslöseeinrichtung 5 gibt demzufolge einen entsprechenden Auslöseimpuls $P_A$ zur Betätigung des Schaltkontaktes 6 aus. Dabei erfolgt über das Eingangssignal $S_{IN}$ eine Umschaltung zwischen einer Über- und einer Unterspannungstriggerung. Das Ausgangssignal D des bistabilen Kippgliedes 4 bleibt solange erhalten, bis über den Quittierungstaster 22 das Quittierungssignal $S_Q$ am Eingang E4 der bistabilen Kippstufe 4 ansteht, so dass diese in den vorherigen stabilen Zustand und das Ausgangssignal D von beispielsweise low auf high wechselt.

Ist die zu überwachende Spannung $U_{IN}$ und damit die am Eingang E1 der Komparatorschaltung 2 anstehende Eingangsspannung U1 kleiner als die Vergleichsspannung U2 oder handelt es sich um Gleichspannungen, die kleiner oder größer als die eingestellt Vergleichsspannung U2 sind, so bleibt das Zustandssignal A der Komparatorschaltung 2 auf einem konstanten Wert, z.B. auf high oder low. Demzufolge wird das erste Monoflop 11 nicht aktiviert und die UND-Glieder 12,13 und somit die logischen Verknüpfungen $\bar{A}+B$ bzw. $A+\bar{B}$ liefern keine Signale.

Zeigt das Zustandssignal A einen Signalwechsel, wird das zweite Monoflop 16 getriggert, so dass bei regelmäßiger Triggerung gemäß den Phasen II,III und IV nach FIG 2 das Ausgangssignal C den Zustand high zeigt. Erst bei einem Übergang in eine zu kleine Eingangsspannung U1 oder bei Anliegen von Gleichspannungen wird das Ausgangssignal C des zweiten Monoflops 16 low.

Mit den entsprechenden logischen Verknüpfungen $A+\bar{C}$ am Ausgang des UND-Gliedes 18 für zu hohe Gleichspannungen und der logischen Verknüpfung $\bar{A}+\bar{C}$ am Ausgang des UND-Gliedes 17 für Unterspannungen, d. h. für zu kleine Gleichspannungen oder zu kleine Wechselspannungen, werden sowohl Gleich- als auch Wechselspannungssignal überwacht.

Für die Gesamtaussage hinsichtlich einer Überspannung oder einer Unterspannung werden die beiden Verknüpfungssignale $\bar{A}+B$ und $\bar{A}+\bar{C}$ für Unterspannungssignale $S_U$ und die beiden Verknüpfungssignale $A+\bar{B}$ und $A+\bar{C}$ für Überspannungssignale $S_{UE}$ mittels der ODER-Glieder 14 bzw. 15 logisch verknüpft und über die als digitaler Umsetzer geschalteten Glieder 19 bis 21 dem Eingang E3 der bistabilen Kippstufe 4 zugeführt. Somit wird ein einmal erkannter Über- oder Unterspannungszustand festgehalten. Die entsprechende Meldung kann nur durch Betätigen der Quittierungstaste 22 zurückgesetzt werden.

FIG 4 zeigt eine Ausführung der Verknüpfungsschaltung 3 für einen reinen Unterspannungsauslöser 1. Dazu umfasst diese lediglich die beiden monostabilen Kippglieder 11 und 16 sowie die beiden UND-Glieder 12 und 17 und das ODER-Glied 14. Analog umfasst ein reiner Überspannungsauslöser 1 wiederum die beiden Monoflops 11 und 16 sowie in nicht näher dargestellter Art und Weise die beiden UND-Glieder 13 und 18 sowie das ODER-Glied 15.

Bei der Ausführungsvariante gemäß FIG 4 ist der bistabilen Kippstufe 4 eine weitere bistabile Kippstufe 33 vorgeschaltet, deren (zweiter) Eingang E4' zusammen mit dem Eingang E4 der bistabilen Kippstufe 4 an den Quittierungstaster 22 geführt ist. Ausgangsseitig ist die weitere bistabile Kippstufe 33, deren erster Eingang E3' an den Ausgang des ODER-Gliedes 14 geführt ist, an ein weiteres UND-Glied 34 geführt. Das Ausgangssignal E der weiteren bistabilen Kippstufe 33 ist zudem über ein weiteres monostabile Kippglied in Form wiederum eines Monoflops 35 mit einer Verzögerungszeit oder Impulsdauer T4 geführt, dessen invertiertes Ausgangssignal ebenfalls dem UND-Glied 34 zugeführt ist. Ausgangsseitig ist das UND-Glied 34 an den ersten Eingang E3 der bistabilen Kippstufe 4 geführt.

Mittels dieser Schaltungserweiterung mit der bistabilen Kippstufe 33, dem Monoflop 35 und dem UND-Glied 34 werden Über-oder Unterspannungssignale $S_{UE}$ bzw. $S_U$ während der Verzögerungszeit oder Impulsdauer T4 unterdrückt. Eine Ansteuerung der bistabilen Kippstufe 4 und damit die Erzeugung eines Auslöseimpulses $P_A$ erfolgt erst bei einer während der vergleichsweise langen Impulsdauer T4 anstehenden Unter- bzw. Überspannung.


**Patentansprüche**

1. Unter- und/oder Überspannungsauslöser (1) mit einer Auslöseeinrichtung (4), die bei Abweichung einer zu überwachenden Spannung ($U_{IN}$, U1) mit gegebener Netzfrequenz ($f_N$) von einem Spannungsschwellwert (U2) einen Auslöseimpuls ($P_A$) zur Betätigung eines Schaltkontaktes (7) ausgibt, **gekennzeichnet durch**

   - eine Komparatorschaltung (2), die aus einem Vergleich der zu überwachenden Spannung ($U_{IN}$,U1) mit dem Spannungsschwellwert (U2) ein Zustandssignal (A) mit einer ersten Impulsdauer (TA) erzeugt, und
   - eine Verknüpfungsschaltung (3), die das Zustandssignals (A) und ein Vergleichssignal (B) mit einer zweiten Impulsdauer (T1) logisch miteinander verknüpft sowie bei Abweichung der ersten Impulsdauer (TA) von der zweiten Impulsdauer (T1) einen Unterspannungsimpuls ($S_U$) bzw. einen Überspannungsimpuls ($S_{UE}$) zur Generierung des Auslöseimpulses ($P_A$) erzeugt.

2. Unter- und/oder Überspannungsauslöser nach Anspruch 1, **dadurch gekennzeichnet, dass** die zu überwachende Spannung ($U_{IN}$) einem ersten Eingang (E1) der Komparatorschaltung (2) über eine Gleichrichterschaltung (9a) als Eingangsspannung (U1) zugeführt ist.

3. Unter- und/oder Überspannungsauslöser nach Anspruch 1 oder 2, **dadurch gekennzeichnet, dass** der Spannungsschwellwert eine der Komparatorschaltung (2) zugeführte veränderbare Vergleichsspannung (U2) ist.

4. Unter- und/oder Überspannungsauslöser nach Anspruch 3, **dadurch gekennzeichnet, dass** einem zweiten Eingang (E2) der Komparatorschaltung (2) die Vergleichsspannung (U2) über einen Buskoppler (24) zugeführt ist.

5. Unter- und/oder Überspannungsauslöser nach einem der Ansprüche 1 bis 4, **dadurch gekennzeichnet, dass** die (zweite) Impulsdauer (T1) des Vergleichssignals (B) dem 0,25-fachen der Netzfrequenz ($f_N$) entspricht.

6. Unter- und/oder Überspannungsauslöser nach einem der Ansprüche 1 bis 3, **gekennzeichnet durch** eine der Verknüpfungsschaltung (3) nachgeschaltete bistabile Kippstufe (4), die ausgangsseitig mit der Auslöseeinrichtung (5) verbunden ist.

7. Unter- und/oder Überspannungsauslöser nach einem der Ansprüche 1 bis 6, **dadurch gekennzeichnet, dass** der Verknüpfungsschaltung (3) ein erstes monostabiles Kippglied (11) mit einer der zweiten Impulsdauer (T1) entsprechenden Verzögerungszeit zugeordnet ist.

8. Unter- und/oder Überspannungsauslöser nach einem der Ansprüche 1 bis 7, **dadurch gekennzeichnet, dass** die zweite Impulsdauer (T1) einstellbar ist.

9. Unter- und/oder Überspannungsauslöser nach Anspruch 7 oder 8, **dadurch gekennzeichnet, dass** das erste monostabile Kippglied (11) eingangsseitig an den Ausgang der Komparatorschaltung (2) und ausgangsseitig an einen ersten Eingang mindestens eines UND-Gliedes (12,13) geführt ist, an dessen zweiten Eingang der Ausgang der Komparatorschaltung (2) geführt ist.

10. Unter- und/oder Überspannungsauslöser nach einem der Ansprüche 1 bis 9, **dadurch gekennzeichnet, dass** der Verknüpfungsschaltung (3) ein zweites monostabiles Kippglied (16) mit einer mindestens der halben Netzfrequenz ($f_N$) entsprechenden dritten Impulsdauer (T2) zugeordnet ist.

11. Unter- und/oder Überspannungsauslöser nach Anspruch 10, **dadurch gekennzeichnet, dass** die dritte Impulsdauer (T1) einstellbar ist.

12. Unter- und/oder Überspannungsauslöser nach Anspruch 10 oder 11, **dadurch gekennzeichnet, dass** das zweite monostabile Kippglied (16) eingangsseitig an den Ausgang der Komparatorschaltung (2) und ausgangsseitig an einen ersten Eingang mindestens eines UND-Gliedes (17,18) geführt ist, an dessen zweiten Eingang der Ausgang der Komparatorschaltung (2) geführt ist.

13. Unter- und/oder Überspannungsauslöser nach Anspruch 12, **dadurch gekennzeichnet, dass** das eingangsseitig mit dem ersten monostabilen Kippglied (11) verbundene UND-Glied (12,13) ausgangsseitig an einen ersten Eingang eines ODER-Gliedes (14,15) geführt ist, an dessen zweiten Eingang der Ausgang des eingangsseitig mit dem zweiten monostabilen Kippglied (16) verbundenen UND-Gliedes (17,18) geführt ist

14. Unter- und/oder Überspannungsauslöser nach einem der Ansprüche 1 bis 13 als Anbaumodul für ein Niederspannungsschaltgerät, insbesondere für einen elektrischen Schutzschalter (8).

Fig. 1

EP 1 154 538 A1

Fig. 2

Fig. 3

Fig. 4

**Europäisches Patentamt**

## EUROPÄISCHER RECHERCHENBERICHT

Nummer der Anmeldung

EP 00 10 9907

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 156 280 A (GRIESS ROY K) 22. Mai 1979 (1979-05-22) * Spalte 1, Zeile 65 - Spalte 2, Zeile 37; Abbildungen 1,3 * | 1 | H02H3/20 H02H3/247 |
| | | | **RECHERCHIERTE SACHGEBIETE (Int.Cl.7)** |
| | | | H02H |

Der vorliegende Recherchenbericht wurde für alle Patentansprüche erstellt

| Recherchenort | Abschlußdatum der Recherche | Prüfer |
|---|---|---|
| DEN HAAG | 22. September 2000 | Salm, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 10 9907

In diesem Anhang sind die Mitglieder der Patentfamilien der im obengenannten europäischen Recherchenbericht angeführten Patentdokumente angegeben.

Die Angaben über die Familienmitglieder entsprechen dem Stand der Datei des Europäischen Patentamts am
Diese Angaben dienen nur zur Unterrichtung und erfolgen ohne Gewähr.

22-09-2000

| Im Recherchenbericht angeführtes Patentdokument | Datum der Veröffentlichung | Mitglied(er) der Patentfamilie | Datum der Veröffentlichung |
|---|---|---|---|
| US 4156280 A | 22-05-1979 | DE 2751973 A | 22-06-1978 |
| | | FR 2374689 A | 13-07-1978 |
| | | GB 1588757 A | 29-04-1981 |
| | | IT 1115543 B | 03-02-1986 |
| | | JP 1371653 C | 07-04-1987 |
| | | JP 53076335 A | 06-07-1978 |
| | | JP 61032894 B | 30-07-1986 |

EPO FORM P0461

Für nähere Einzelheiten zu diesem Anhang : siehe Amtsblatt des Europäischen Patentamts, Nr.12/82